Europäisches Patentamt

European Patent Office

Office européen des brevets

(11) Publication number: **0 064 865**
**B1**

(12) **EUROPEAN PATENT SPECIFICATION**

(45) Date of publication of patent specification: 21.11.84

(51) Int. Cl.³: **B 60 K 37/02**

(21) Application number: 82302303.1

(22) Date of filing: 06.05.82

(54) Instrument panel.

(30) Priority: 13.05.81 GB 8114542

(43) Date of publication of application:
17.11.82 Bulletin 82/46

(45) Publication of the grant of the patent:
21.11.84 Bulletin 84/47

(84) Designated Contracting States:
BE DE FR GB IT NL SE

(56) References cited:
DE-A-2 708 433
GB-A-1 285 387
US-A-3 590 136

J. JANSEN "Beleuchtungstechnik", Band I,
Grundlagen, 1954 PHILIPS' TECHNISCHE
BIBLIOTHEK, Eindhoven pages 109-113

(73) Proprietor: FORD MOTOR COMPANY LIMITED
Eagle Way
Brentwood Essex CM13 3BW (GB)
(84) BE GB IT NL SE

(73) Proprietor: FORD-WERKE
AKTIENGESELLSCHAFT
Ottoplatz 2 Postfach 21 03 69
D-5000 Köln 21 (DE)
(84) DE

(73) Proprietor: FORD FRANCE SOCIETE ANONYME
344 Avenue Napoléon Bonaparte B.P. 307
F-92506 Rueil Malmaison Cedex (FR)
(84) FR

(72) Inventor: Jackson, Alan Sidney
30 Badgers Way Thundersley
Benfleet Essex (GB)

(74) Representative: Drakeford, Robert William et al
Ford Motor Company Limited 15/448, Research
& Engineering Centre Laindon
Basildon Essex SS15 6EE (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 064 865 B1

## Description

This invention relates to instrument panels, especially motor vehicle instrument panels.

Conventional motor vehicle instrument panels comprise a display unit having a plurality of adjacent areas which are separately illuminable, for example a speedometer dial, gauges and warning lights. In order to reduce reflections from such instrument panels via the vehicle windscreen at night, it has been proposed to secure a shade comprising a set of horizontal, parallel louvres over the display unit (as disclosed in British Patent Specification No. 1285387).

Where the display unit includes electronic light sources such as vacuum flourescent tubes, light-emitting diodes or liquid crystal displays, the intensity of the light source is relatively low and its visibility is significantly reduced in daylight. Hitherto this problem has been solved by positioning the display unit deep within a recess in an instrument panel housing. This is however unsatisfactory in that the display unit is positioned further from the driver's eye, and the necessity of providing a deep recess for the unit places a restriction on the styling of the instrument panel housing.

According to the present invention there is provided an instrument panel comprising a display unit having a plurality of illuminable adjacent display areas, and a shade having a plurality of louvres overlying the display unit, characterised in that the shade comprises a grid of intersecting louvres positioned immediately adjacent the display unit and defining apertures of a shape and size corresponding to and registering with the display areas.

By providing a grid of intersecting louvres and matching the apertures therein to the shape and size of the display areas, the shade can be of a relatively shallow depth and still provide adequate shade for each display area. For example we have found that if the shade is positioned immediately adjacent the surface of the display unit, adequate shade can be provided by louvres of from 0.25 to 1.5 cm in depth and a horizontal and vertical spacing of from 1. to 2.5 cm.

The configuration of the grid will depend upon the relative shapes and sizes of the display areas. In general however, the display unit can be sub-divided into a plurality of rectangular or square display areas. Consequently the shade will usually comprise a grid of intersecting horizontal and vertical louvres.

In order to reduce the effects of parallax, the horizontal louvres are preferably arranged in planes which converge towards a predetermined observation region such as the vehicle "eye-ellipse", i.e. the elliptical region in which the average vehicle driver's eye is normally positioned. Similarly the vertical louvres are preferably arranged in planes which also converge towards a predetermined observation region such as the eye ellipse.

In order to reduce the amount of light reflected normally from the display unit, a layer of transparent material having a non-reflective surface preferably overlies the display unit. The shade is preferably positioned between this layer of transparent material and the surface of the display unit so that the layer prevents dust from settling on the louvres.

Although the invention is applicable to instrument panels incorporating any display unit, it is most appropriate for electronic display units.

Figure 1 illustrates a side view of a motor vehicle incorporating an instrument panel in accordance with the invention;

Figure 2 illustrates a plan of the motor vehicle of Figure 1;

Figure 3 illustrates, in perspective, the instrument panel incorporated in the vehicle of Figures 1 and 2,

Figure 4 is an enlarged view of part of the panel of Figure 3.

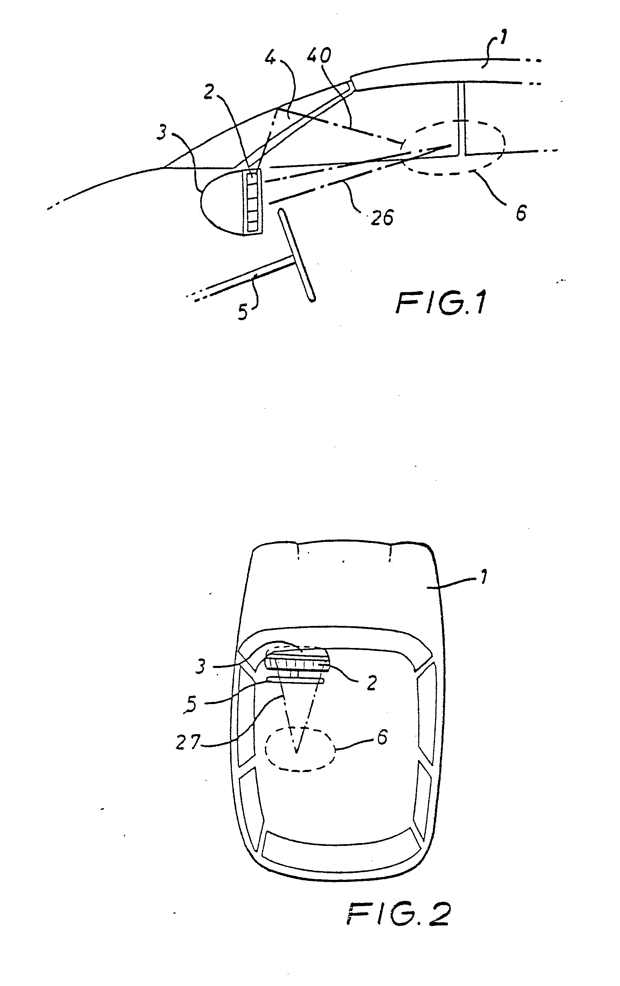

Referring to Figures 1 and 2 of the drawings, a motor vehicle 1 comprises an instrument panel 2 mounted in a housing 3 beneath the windscreen 4 and above the steering column 5. The driver sits rearwardly of the column in a position such that his eye normally lies within the ellipsoidal volume 6 known as the eye ellipse.

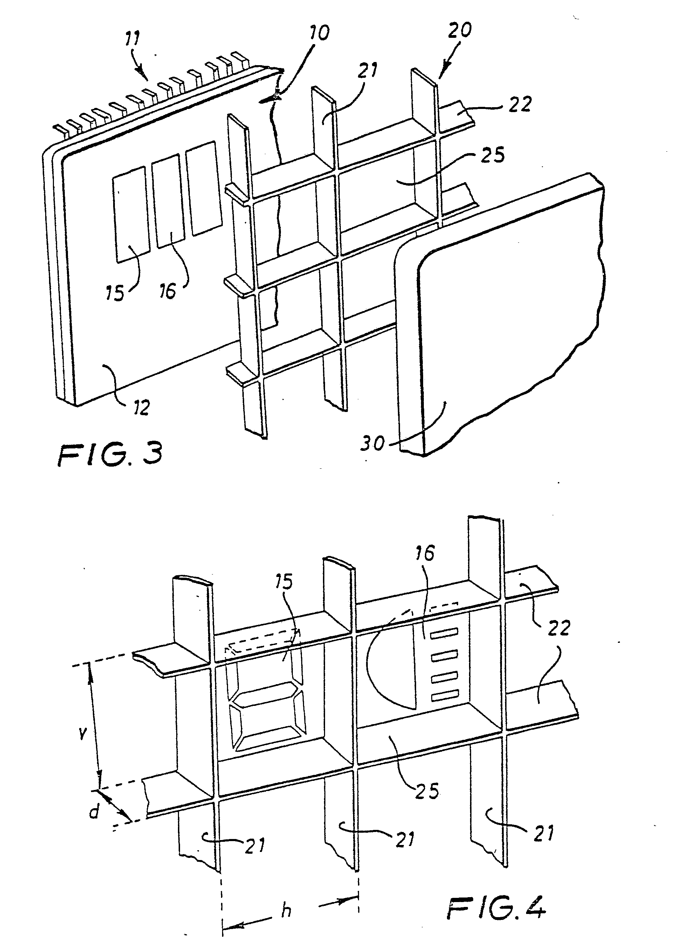

Referring now to Figures 3 and 4, the instrument panel 2 comprises a display unit 10 which, in the present example, is a vacuum fluorescent discharge tube of conventional construction. Electric current is supplied to the unit 10 via terminals 11 sealed into the glass envelope 12 of the unit 10. As best illustrated in Figure 4, the display unit 10 has a plurality of adjacent display areas 15, 16 each of which can be illuminated separately to display information. For example the display area 15 contains an alphanumeric display which, in conjunction with adjacent areas may indicate time, speed, engine speed or distance. Another area 16 contains an indicator light which for example shows the state of illumination of the vehicle headlamp. Immediately adjacent the display unit 10 in contact with the surface of the envelope 12 is a shade 20 which comprises a grid of horizontal and vertical louvres 21, 22 which are of dark, non-reflective material. The horizontal and vertical louvres intersect at 90° to provide an array of rectangular or square apertues 25. The shape and size of the apertures corresponds with the shape and size of the display areas 15, 16 and lie in registry therewith so that each of the display areas 15, 16 is visible through a respective one of the apertures 25.

The louvres 22 are all arranged in planes directed towards the eye ellipse 6 so that the extent to which they obscure the visibility of the display areas 18, 16 is minimised. In the present example these planes converge along the lines 26 illustrated in Figure 1. An arrangement in which the horizontal louvres 22 are parallel is also possible.

Similarly the vertical louvres 21 are all arranged in planes directed towards the eye ellipse 6. Since the width of the panel is greater than its height, it is more important than the vertical louvres should be arranged in converging planes, as indicated by the lines 27 in Figure 2.

A layer 30 of transparent material overlies the shade 20 so that the shade 20 is positioned between the layer 30 and the surface of the display unit 10. The outer surface 31 of the layer 30 is treated to reduce reflections. This may for example be achieved by coating the outer surface 31 with a layer of conventional non-reflective material or etching the outer surface in a known way.

In practice the precise dimensions chosen for the size and shape of the apertures and the depth of the louvres will vary according to the size and shape of the display areas. For most purposes however, rectangular or square display areas will be appropriate, in which case rectangular or square apertures will be chosen. In most electronic instrument panels individual display areas for each adphanumeric are not greater than 3 cm square and are usually about 1.5 cm square. The vertical and horizontal spacings for the louvres $v$ and $h$ (Fig. 4) will therefore not normally exceed 3 cm. Usually the spacings $h$ $d$ and $v$ will be from 1.25 cm and preferably marginally larger than the size of the symbol displayed. For example where a 1.5 cm square symbol is used, the spacings $v$ and $d$ are preferably 1.8 cm so that the effects of parralax are reduced. Similarly the depth $d$ of the louvres will vary with the size and shape of the display area 20. Where small display areas are used, the depth $d$ will be shallower. A further factor influencing the depth $d$ is the distortion produced by the non reflective coating on the layer of transparent material 30. In most cases a depth $d$ of 0.25 to 1.5 cm will be appropriate. Preferably the depth $d$ is less than 1 cm and, in the example illustrated, a depth $d$ of 0.8 cm is used.

It will be appreciated that, in use, the louvres 21, 22 and the non reflective coating on the layer 30 reduce the amount of light falling on the display areas and therefore improve the visibility of these areas in daylight. In addition, the horizontal louvres prevent light from the display unit from being reflected off the windscreen 4 (as indicated by the line 40 in Fig. 1) thereby interfering with the driver's view from the vehicle at night.

In an alternative embodiment of the invention (not illustrated) the shade 20 is incorporated within the envelope 12 of the display unit 10, reducing the depth of the panel.

## Claims

1. An instrument panel comprising a display unit (10) having a plurality of illuminable adjacent display areas (15, 16) and a shade (20) having a plurality of louvres (21, 22) overlying the display unit (10), characterised in that the shade (20) comprises a grid of intersecting louvres (21, 22) positioned immediately adjacent the display unit (10) and defining apertures (25) of a shape and size corresponding to and registering with the display areas (15, 16).

2. An instrument panel according to claim 1 wherein the shade (20) comprises a grid of intersecting horizontal and vertical louvres (21, 22),

3. An instrument panel according to claim 2 wherein the horizontal louvres (22) are arranged in planes which converge towards an observation region (6).

4. An instrument panel according to claim 2 or claim 3 wherein the vertical louvres (21) are arranged in planes which converge towards an observation region (6).

5. An instrument panel according to any one of claims 1 to 4 wherein the louvres (21, 22) are from 0.25 to 1.5 cm in depth and have a horizontal and vertical spacing of from 1 to 2.5 cm.

6. An instrument panel according to any one of claims 1 to 5 further comprising a layer of transparent material (30) having a non-reflective surface overlying the display area (15, 16).

7. An instrument panel according to claim 6 wherein the shade (20) lies between the said layer (30) and the surface of the display unit (10).

8. An instrument panel according to any one of claims 1 to 7 wherein the display unit (10) comprises a vacuum fluorescence tube.

9. An instrument panel according to claim 8 wherein the shade (20) is housed within an envelope (12) of the vacuum fluorescence tube.

## Revendications

1. Tableau d'instruments comprenant un ensemble d'affichage (10) qui présente plusieurs plages d'affichage (15, 16) adjacentes pouvant être éclairées et un cadre d'ombrage (20) présentant plusieurs volets (21, 22) recouvrant l'ensemble d'affichage (10), caractérisé en ce que le cadre d'ombrage (20) comprend une grille constituée de volets (21, 22) qui se coupent, disposée au voisinage immédiat de l'ensemble d'affichage (10) et définissant des ouvertures (25) dont la forme et la grandeur correspondent aux et coïncident avec les plages d'affichage (15, 16).

2. Tableau d'instruments suivants la revendication 1, dans lequel le cadre d'ombrage (20) comprend une grille constituée de volets horizontaux et verticaux (21, 22) qui ce coupent.

3. Tableau d'instrument suivant la revendication 2, dans lequel les volets horizontaux (22) sont disposés dans des plans qui convergent vers une région d'observation (6).

4. Tableau d'instruments suivants la revendication 2 ou la revendication 3, dans lequel les volets verticaux (21) sont disposés dans des plans qui convergent vers une région d'observation (6).

5. Tableau d'instruments suivants l'une ou l'autre des revendications 1 à 4, dans lequel les volets (21, 22) ont une profondeur comprise entre 0,25 et 1,5 cm et un écartement horizontal et vertical compris entre 1 et 2,5 cm.

6. Tableau d'instruments suivants l'une l'autre des revendications 1 à 5, comprenant en outre une couche en matériau transparent (30) présentant une surface non-réfléchissante couvrant les plages d'affichage (15, 16).

7. Tableau d'instruments suivant la revendication 6, dans lequel le cadre d'ombrage (20) est disposé entre la dite couche (30) et la surface de l'ensemble d'affichage (10).

8. Tableau d'instruments suivant l'une ou l'autre des revendications 1 à 7, dans lequel l'ensemble d'affichage (10) comporte un tube fluorescent sous vide.

9. Tableau d'instruments suivant la revendication 8, dans lequel le cadre d'ombrage (20) est logé dans une enveloppe (12) du tube fluorescent sous vide.

## Patentansprüche

1. Instrumentenbrett mit einer Anzeigeanordnung (10), die mehrere beleuchtbare, nebeneinander liegende Anzeigeflächen (15, 16) und einen Schirm (20) mit einer Mehrzahl über der Anzeigeeinheit (10) liegenden Leisten (21, 22), umfasst, dadurch gekennzeichnet, dass der Schirm (20) aus einem Gitter sich überschneidender Leisten (21, 22) besteht, die unmittelbar an der Anzeigeeinheit (10) angeordnet sind und mit den Anzeigeflächen (15, 16) ausgerichtete Oeffnungen (25) einer diesen entsprechenden Gestalt und Grösse begrenzen.

2. Instrumentenbrett nach Anspruch 1, worin der Schirm (20) aus einem Gitter sich überschneidender waagerechter und senkrechter Leisten (21, 22) besteht.

3. Instrumentenbrett nach Anspruch 2, worin die waagerechten Leisten (22) in auf eine Beobachtungszone (6) hin zusammenlaufenden Ebenen angeordnet sind.

4. Instrumentenbrett nach Anspruch 2 oder 3, worin die senkrechten Leisten (21) in auf eine Beobachtungszone (6) hin zusammenlaufenden Ebenen angeordnet sind.

5. Instrumentenbrett nach einem der Ansprüche 1 bis 4, worin die Leisten (21, 22) eine Tiefe von 0,25 bis 1,5 cm sowie waagerechte und senkrechte Abstände von 1 bis 2,5 cm aufweisen.

6. Instrumentenbrett nach einem der Ansprüche 1 bis 5, welches ferner eine Schicht transparenten Materials (30) mit einer über der Anzeigefläche (15, 16) liegenden, nichtreflektierenden Oberfläche enthält.

7. Instrumentenbrett nach Anspruch 6, worin sich der Schirm (20) zwischen dieser Schicht (30) und der Oberfläche der Anzeigeeinheit (10) befindet.

8. Instrumentenbrett nach einem der Ansprüche 1 bis 7, worin die Anzeigeeinheit (10) eine Vakuumleuchtröhre umfasst.

9. Instrumentenbrett nach Anspruch 8, worin der Schirm (20) innerhalb einer Einfassung (12) der Vakuumleuchtröhre untergebracht ist.

FIG.1

FIG.2

0 064 865

FIG. 3

FIG. 4

2